# EUROPÄISCHE PATENTANMELDUNG

(11) **EP 2 650 743 A1**
(43) Veröffentlichungstag der Anmeldung: **16.10.2013**
(21) Anmeldenummer: 13158787.5
(22) Anmeldetag: 12.03.2013
(51) Int. Cl.: G05B 23/02, G06Q 50/06, G08B 21/18

(54) **Energie- und Mediendaten vs. Maschinenzustand**

(30) Priorität: 13.04.2012 DE 102012206082
(71) Anmelder: Krones AG, 93073 Neutraubling (DE)
(72) Erfinder: Zölfl, Markus, 93073 Neutraubling (DE); Raith, Stefan, 93073 Neutraubling (DE)
(74) Vertreter: Grünecker, Kinkeldey, Stockmair & Schwanhäusser

(57) **Zusammenfassung**

Verfahren zur Beurteilung eines Zustands einer Anlage und zur Einleitung von Maßnahmen basierend auf der Beurteilung mit den Schritten: Aufnehmen von Energie- und/oder Mediendaten über einen Referenzzeitraum vordefinierter Dauer zur Bestimmung von Referenzwerten jeweils für die Energie- und/oder Mediendaten; Aufnehmen von Energie- und/oder Mediendaten über einen Vergleichszeitraum vordefinierter Dauer, die beispielsweise gleich der Dauer des Referenzzeitraums ist, zur Bestimmung von Vergleichswerten jeweils für die Energie- und/oder Mediendaten; Vergleichen der Vergleichswerte für die Energie- und/oder Mediendaten mit den korrespondierenden Referenzwerten; Einleiten von vordefinierten Maßnahmen bezüglich der Anlage, wenn die jeweilige Abweichung der Vergleichswerte von den korrespondierenden Referenzwerten einen korrespondierenden vordefinierten Toleranzwert überschreitet.

## Beschreibung

Die Erfindung betrifft ein Verfahren und eine Vorrichtung zur Aufnahme von Energie- und/oder Mediendaten zur Beurteilung eines Anlagenzustands und die Einleitung möglicher Maßnahmen basierend auf der Beurteilung.

Bereits heute werden in Industriebetrieben verschiedene Energie- und Mediendaten insbesondere im Hinblick auf den Verbrauch aufgenommen, um mögliche Optimierungen der Verbrauchswerte zu erreichen. Dabei gibt es beispielsweise Einzelmessungen an Anlagen oder Maschinen oder ganzen Produktionslinien. Ein Problem dabei ist nicht nur das Optimieren der Verbrauchswerte dieser Maschinen, sondern auch das Erkennen von Abweichungen von den optimierten Verbrauchswerten, beispielweise von Energieverlusten. Akute und offensichtliche Fehler an Anlagen oder Maschinen können durch Herunterfahren oder Schnellabschaltungen (aktive Standby-Schaltung) begegnet werden. Hierzu können Sensoren an oder in verschiedenen Teilen der Anlage vorgesehen sein. Insbesondere bei komplexen, mehrteiligen Anlagen oder Maschinen oder Produktionslinien ist jedoch nicht immer und nicht sofort offensichtlich, dass ein Fehlerzustand aufgetreten ist.

Angesichts der oben skizzierten Probleme ist es Aufgabe der vorliegenden Erfindung, Energie- und/oder Medienverluste zu erkennen und zu optimieren, also zu verringern oder zu vermeiden und die Erkennung der Verluste zu optimieren.

Diese Aufgabe wird gemäß Patentanspruch 1 durch ein Verfahren zur Beurteilung eines Zustands einer Anlage und zur Einleitung von Maßnahmen basierend auf der Beurteilung gelöst. Ebenso wird diese Aufgabe gemäß Patentanspruch 10 durch eine entsprechende Vorrichtung zur Durchführung des genannten Verfahrens gelöst.

Dabei wird der Begriff Anlage im Folgenden für eine Maschine, beispielsweise eine Blasmaschine zur Blasformung von PET-Flaschen, eine Produktionsanlage, beispielsweise eine Abfüllanlage für Getränke, oder ein Teil einer Produktionsanlage, beispielsweise einen Füller einer Abfüllanlage für Getränke, oder eine Produktionslinie, beispielsweise die komplette Produktion und Abfüllung eines Getränks, verwendet.

Die Erfindung stellt ein Verfahren zur Beurteilung eines Zustands einer Anlage und zur Einleitung von Maßnahmen basierend auf der Beurteilung bereit mit den Schritten: Aufnehmen von Energie- und/oder Mediendaten über einen Referenzzeitraum vordefinierter Dauer zur Bestimmung von Referenzwerten jeweils für die Energie- und/oder Mediendaten; Aufnehmen von Energie- und/oder Mediendaten über einen Vergleichszeitraum vordefinierter Dauer, die beispielsweise gleich der Dauer des Referenzzeitraums ist, zur Bestimmung von Vergleichswerten jeweils für die Energie- und/oder Mediendaten; Vergleichen der Vergleichswerte für die Energie- und/oder Mediendaten mit den korrespondierenden Referenzwerten; Einleiten von vordefinierten Maßnahmen bezüglich der Anlage, wenn die jeweilige Abweichung der Vergleichswerte von den korrespondierenden Referenzwerten einen korrespondierenden, vordefinierten Toleranzwert überschreitet.

Das Verfahren betrachtet also einfach zugängliche Energie- und/oder Mediendaten der Anlage, die über einen Zeitraum vordefinierter Dauer gewonnen wurden und vergleicht diese mit Referenzdaten, die vorher gewonnen wurden. Es versteht sich, dass dem Aufnehmen der Energie- und/oder Mediendaten ein Schritt zum Definieren der Energie- und/oder Mediendaten vorausgehen kann. Hier werden die Begriffe Dauer eines Zeitraums und Länge eines Zeitraums synonym verwendet. Beispielsweise können die Referenzdaten/Referenzwerte für die betrachtete Anlage bei Inbetriebnahme der Anlage als Kennlinien vorgeben sein. Die Referenzdaten können aktualisiert werden. Der betrachtete Zeitraum dient zur Normierung und zur Bereitstellung einer Vergleichbarkeit der Daten. Dieser Zeitraum kann beispielsweise 1 Stunde, 1 Tag, 1 Woche betragen, wobei auch kürzere oder längere Zeiträume möglich sind. Der Vergleichszeitraum kann in seiner Länge/Dauer der Länge/Dauer des Referenzzeitraums entsprechen. Das Vergleichen und damit Beurteilen kann unmittelbar nach dem Aufnehmen der Vergleichswerte/Vergleichsdaten erfolgen. Ebenso kann das Vergleichen und Beurteilen zu einem späteren Zeitpunkt erfolgen, da die Vergleichswerte und Referenzwerte gespeichert werden können und zur Verfügung stehen. Es ist damit ebenso möglich, die Vergleichswerte in Abhängigkeit von der Zeit zu protokollieren und zu speichern. Dadurch ergibt sich der Vorteil, zu einer gewählten Zeit den Vergleich durchführen zu können und entsprechend vordefinierte Maßnahmen bezüglich der Anlage einleiten zu können. Dabei werden die korrespondierenden Referenzwerte betrachtet und korrespondierende, vordefinierte Toleranzwerte betrachtet. Diese Toleranzwerte können sich beispielsweise eine Abweichung, insbesondere eine Erhöhung des Verbrauchs an Energie- und/oder Medien beziehen und können für die Anlage von außen gesetzt werden. Ist beispielsweise die Differenz zwischen Referenzwert und Vergleichswert größer als eine vordefinierte Schwellentoleranz, so können vordefinierte Maßnahmen eingeleitet werden. Gleichermaßen können absolute oder prozentuale Abweichung zwischen den Referenzwerten und den Vergleichswerten betrachtet werden. Der Nutzer der Anlage kann diese Toleranzwerte ändern. Die Toleranzwerte können auch statistisch betrachtet werden, etwa wie häufig die Toleranz überschritten wurde. Ab einer bestimmten Häufigkeit der Überschreitung der Toleranz kann dann die entsprechende vordefinierte Maßnahme eingeleitet werden. Die Betrachtung der Energie- und/oder Mediendaten kann auch kombiniert erfolgen, beispielsweise kann das Einleiten einer Maßnahme nur dann erfolgen, wenn mehrere der aufgenommenen Daten im Wesentlichen gleichzeitig die Toleranzwerte überschreiten.

In dem Verfahren wie oben beschrieben umfassen die Energiedaten beispielsweise den Verbrauch an Energie und/oder Strom.

Dabei werden beispielsweise Energiedaten, wie etwa Wärmeenergie oder entsprechend Kühlenergie und Strom separat betrachtet, um weitere Differenzierungsmöglichkeiten hinsichtlich der Daten zu haben.

In dem Verfahren wie oben beschrieben umfassen die Mediendaten beispielsweise den Verbrauch von mindestens einem der folgenden Medien: Wasser, Fluide, Öl, Schmierfette, Reinigungsmittel.

In dem Verfahren wie oben beschrieben können die Maßnahmen Informationsmaßnahmen und/oder Sicherheitsmaßnahmen umfassen.

Dabei können Informationsmaßnahmen den Zustand der Anlage mitteilen oder über den Zustand der Anlage informieren. Die Sicherheitsmaßnahmen können im Hinblick auf kurzfristig auftretende Probleme der Anlage ergriffen werden und dienen der Sicherheit und dem Schutz der Anlage und insbesondere ihrer Nutzer.

In dem Verfahren wie oben beschrieben können die Informationsmaßnahmen das beispielsweise automatisierte Aussenden von vordefinierten optischen und/oder akustischen Signalen umfassen, beispielsweise das Verschicken von Email und/oder das Verschicken einer Kurznachricht, SMS, auf ein Mobiltelefon und/oder das Verschicken einer Kurznachricht auf einen Funkmeldeempfänger, Pager, und/oder das Verschicken einer aufgezeichneten Sprachnachricht an ein Mobiltelefon oder Festnetztelefon.

Es können also moderne und automatische vordefinierte Informationsmaßnahmen erfolgen, die sowohl die Bediener der Anlage als auch Nutzer der Anlage informieren können, falls sich diese nicht in der Nähe der Anlage aufhalten.

In dem Verfahren wie oben beschrieben können die Sicherheitsmaßnahmen mindestens eine der folgenden Maßnahmen umfassen: Reduktion der Anlagenleistung, Abschalten/Herunterfahren der Anlage, Wartung der Anlage.

Die Anlage kann infolge des Einleitens von Sicherheitsmaßnahmen in ihrer Leistung reduziert werden, beispielsweise kann die Leistung um eine vordefinierte Stufe vermindert werden, beispielsweise 10% oder Vielfache davon. Ebenso kann es erforderlich sein die Anlage herunter zu fahren bis hin zu einer schnellen Abschaltung der Anlage. Ebenso kann eine Wartung der Anlage nach dem Herunterfahren eingeleitet werden. So kann die Anlage besser vor möglichen Schädigungen der Anlage bei auftauchenden Problemen geschützt werden.

Das Verfahren wie oben beschrieben kann ferner den Schritt des Anpassens der Referenzwerte an vordefinierte Produktionsparameter, beispielsweise Produktgrößen umfassen.

Das Verfahren wie oben beschrieben kann ferner den Schritt des Anpassens der Referenzwerte in vordefinierten Zeitabständen umfassen.

Es versteht sich, dass die Referenzwerte und die Vergleichswerte typischerweise geeignet normiert sind, etwa auf eine vorgegebene Zahl von Produkten oder Prozessen, die von der Anlage ausgeführt werden sollen, oder auf die Produktgrößen oder Aspekte des Produktionsprozesses. Hierdurch können unterschiedliche Parameter im Produktionsprozess geeignet berücksichtigt werden. Im Hinblick auf Anlagen, die verschiedenen Produkte oder Prozesse durchführen können, können somit die Referenzwerte geeignet angepasst werden.

Die Erfindung stellt ferner ein Computerprogrammprodukt bereit, umfassend wenigstens ein computerlesbares Medium mit durch einen Computer ausführbaren Anweisungen zum Durchführen der Schritte des Verfahrens wie oben beschrieben beim Betrieb auf einem Computer.

Die Erfindung kann geeignet durch Kontroll- und Steuereinheit, beispielsweise Computer umgesetzt werden. Dabei können diese in die Anlage integriert sein oder separat vorgesehen sein.

Die Erfindung stellt ferner eine Vorrichtung zur Durchführung des Verfahrens wie oben beschrieben bereit, mit einer Aufnahmeeinheit zum Aufnehmen von Energie- und/oder Mediendaten, mit einer Vergleichseinheit zum Vergleichen der Referenzwerte und der Vergleichswerte und mit einer Kontrolleinheit zum Einleiten der vordefinierten Maßnahmen.

Die Aufnahmeeinheit, die Vergleichseinheit und die Kontrolleinheit können einzeln oder kombiniert als separate Einheit vorgesehen sein. Dabei können die Einheiten und damit die Vorrichtung auch in die Anlage integriert sein.

In der Vorrichtung wie oben beschrieben, kann die Aufnahmeeinheit ausgebildet sein, die Energie- und/oder Mediendaten automatisch aufzunehmen, kann die Vergleichseinheit ausgebildet sein, die Referenzwerte und die Vergleichswerte automatisch zu vergleichen, und kann die Kontrolleinheit ausgebildet sein, die vordefinierten Maßnahmen automatisch einzuleiten.

Dadurch ist eine automatische Überwachung und Bewertung einer Anlage auf der Basis der mit der Aufnahmeeinheit, der Vergleichseinheit und der Kontrolleinheit gewonnenen Informationen möglich. Die Aufnahmeeinheit kann dabei die gewonnenen Daten und Referenzwerte auf einem geeigneten Medium, beispielsweise einem Speichermedium speichern.

Der Erfindungsgegenstand wird anhand der nachfolgenden Zeichnungen beispielhaft erläutert.

Es zeigen:
- Fig. 1:: .Ein Schema eines Verfahrens zur Beurteilung eines Zustands einer Anlage und zur Einleitung von Maßnahmen basierend auf der Beurteilung gemäß der vorliegenden Erfindung.
- Fig. 2:: Eine Schemaskizze einer Anlage mit einer Vorrichtung mit Einheiten zur Beurteilung eines Zustands einer Anlage und zur Einleitung von Maßnahmen basierend auf der Beurteilung gemäß der vorliegenden Erfindung.
- Fig. 3: Ein Schema eines Verfahrens zur Beurteilung eines Zustands einer Abfüllanlage und zur Einleitung von Maßnahmen basierend auf der Beurteilung gemäß der vorliegenden Erfindung.

Bei komplexen, mehrteiligen Anlagen oder Maschinen oder Produktionslinien ist nicht immer sofort offensichtlich, dass ein Fehlerzustand aufgetreten ist. Verbraucht eine Anlage, beispielsweise eine Anlage zur Getränkeabfüllung bei gleicher Produktionsleistung plötzlich mehr Strom oder/und es tritt ein erhöhter Medienverbrauch auf, als noch in einem vorhergehenden Zeitintervall, beispielsweise eine oder zwei Wochen vorher, so liegt nahe, dass ein Fehlerzustand aufgetreten sein könnte und die Funktionstüchtigkeit der Anlage/Maschine beeinträchtigt sein könnte. Zudem ist in diesem Beispiel der Energieverbrauch und/oder Medienverbrauch ungünstig erhöht, was die Wirtschaftlichkeit der Anlage beinträchtigen könnte. Hier gilt es, den Zustand der Anlage zu beurteilen und zu beurteilen. Infolge der Beurteilung können basierend auf der Beurteilung Maßnahmen eingeleitet werden.

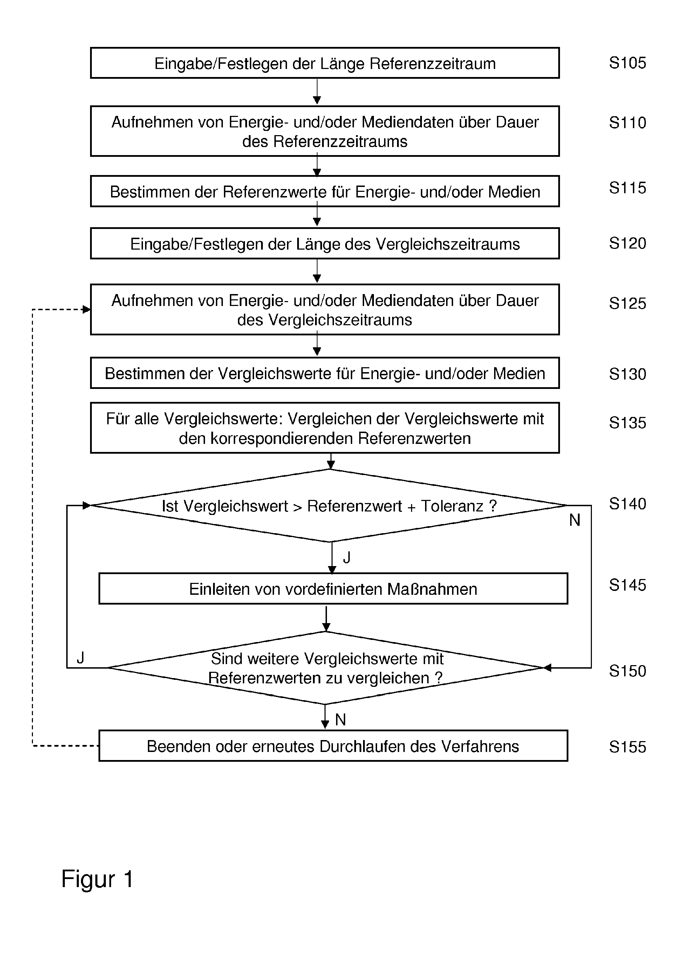

Die Figur 1 zeigt schematisch den Ablauf eines Verfahrens zur Beurteilung eines Zustands einer Anlage und zur Einleitung von Maßnahmen basierend auf der Beurteilung.

In Schritt S105 wird die Dauer/Länge eines Referenzzeitraums festgelegt oder eingegeben, über den die Referenzdaten/Referenzwerte gewonnen werden sollen. Dabei kann es sich um Energie- und/oder Mediendaten handeln, also insbesondere um Verbrauchsdaten bezüglich Energie und/oder Medien. Die Dauer des Referenzzeitraums dient als Normierungsgröße für die Referenzdaten.

In Schritt S110 erfolgt das Aufnehmen von Energie- und/oder Mediendaten über die Dauer des in Schritt S105 vordefinierten Referenzzeitraums. Aus den aufgenommenen Daten für Energie, insbesondere Energieverbrauch und/oder Medien, insbesondere Medienverbrauch können im Schritt S115 die Referenzwerte/Referenzdaten für den betrachteten Referenzzeitraum bestimmt werden. Es versteht sich, dass dem Schritt S110 ein Schritt zum Definieren der Energie- und/oder Mediendaten für den Referenzzeitraum voraus gehen kann.

Im Schritt S120 erfolgt das Eingeben oder Festlegen der Dauer/Länge eines Vergleichszeitraums. Es versteht sich, dass der Vergleichszeitraum auch bereits mit oder unmittelbar im Anschluss an den Schritt S105, also das Festlegen der Dauer des Referenzzeitraums erfolgen kann. Die Dauer des Vergleichszeitraums kann der Dauer des Referenzzeitraums entsprechen. Es kann ebenso möglich sein, für verschiedene Daten unterschiedliche Vergleichs- und/oder unterschiedliche Referenzzeiträume vorzusehen. Beispielsweise kann bei Betrachtung des Verbrauchs von verschiedenen Medien die Betrachtung des Verbrauchs für ein bestimmtes Medium, beispielsweise Wasser, über einen kleinen Zeitraum sinnvoll sein, während die Betrachtung des Verbrauchs für ein weiteres, anderes Medium, beispielsweise Schmierfett eine längeren Betrachtungszeitraum für die Gewinnung der Referenzdaten und/oder der Vergleichsdaten geeignet erscheinen lässt.

Nachdem der Vergleichszeitraum in Schritt S120 definiert ist, werden in Schritt S125 Energie- und/oder Mediendaten für die Dauer des Vergleichszeitraums aufgenommen. Dabei werden zu den Referenzdaten korrespondierende Energie- und/oder Mediendaten aufgenommen. Nach Ende des Vergleichszeitraums werden in Schritt S130 unmittelbar oder zu einer geeigneten Zeit die Vergleichswerte jeweils für die Energie- und/oder Mediendaten bestimmt, also beispielsweise der Energieverbrauch im Vergleichszeitraum und/oder der Gas- oder Wasserverbrauch während des Vergleichszeitraums.

In den Schritten S135 - S150 werden nun nacheinander alle Paare von Vergleichswerten/Vergleichsdaten und Referenzdaten/Referenzwerten betrachtet. In Schritt S140 wird der Vergleichswert mit seinem korrespondierenden Referenzwert verglichen. Falls der Vergleichswert von dem Referenzwert um mehr als ein korrespondierender, vordefinierter Toleranzwert abweicht, werden im Schritt S145 entsprechende Maßnahmen eingeleitet. Dabei versteht es sich, dass der vordefinierte Toleranzwert vom Nutzer der Anlage geändert werden kann. Dies kann beispielsweise ebenfalls in Schritt S105 erfolgen. In Schritt S140 wird beispielhaft die Differenz zwischen Vergleichswert und Referenzwert betrachtet und im Hinblick auf die vordefinierte Toleranz verglichen. Es versteht sich, dass ebenfalls eine Betrachtung der absoluten Größe der Vergleichswerte möglich ist oder eine prozentuale Betrachtung der Abweichung in Bezug auf die Referenzwerte. In Schritt S150 wird geprüft, ob weitere Paare aus Vergleichswert und korrespondierendem Referenzwerte zu betrachten sind. Die Schritte S135 - S150 zeigen beispielhaft das Ergreifen von vordefinierten Maßnahmen nach dem Vergleich in Schritt S140. Es ist ebenso möglich, zunächst sämtliche Paare von korrespondierenden Vergleichs- und Referenzwerten zu betrachten und entsprechende vordefinierte Maßnahmen nur dann zu ergreifen, wenn mehrere Paare von korrespondierenden Vergleichs- und Referenzwerten die korrespondierenden Toleranzen überschreiten. Ebenso ist es möglich (hier nicht dargestellt), dass es mehrere, verschiedenen vordefinierte Maßnahmen für ein Paar von korrespondierenden Vergleichs- und Referenzwerten geben kann. Beispielsweise kann nach dem Überschreiten einer ersten Toleranz eine Informationsmaßnahme eingeleitet werden. Nach dem Überschreiten einer weiteren Toleranz kann eine Sicherheitsmaßnahme eingeleitet werden. In einem rein fiktiven Beispiel kann bei Überschreiten der Toleranz für den Energieverbrauch um 5% ein Information, etwa eine SMS oder eine Email an die Nutzer geschickt werden. Bei Überschreiten der Toleranz um 10% kann eine Sicherheitsmaßnahme, beispielsweise das Herunterfahren der Anlage eingeleitet werden. Damit kann beispielsweise einem "Crash" und damit einer Beschädigung der Anlage besser vorgebeugt werden.

In Schritt S155 wird das Verfahren beendet oder es kann zyklisch wiederholt werden. Dargestellt ist eine Fortsetzung des Verfahrens ab dem Schritt S125, d.h. es folgt das erneute Aufnehmen von Vergleichswerten. Ebenso ist es jedoch möglich, zum Schritt S105 oder S120 zurück zu gehen, um neue Referenzzeiträume und neue Referenzwerte oder neue Vergleichszeiträume festzulegen.

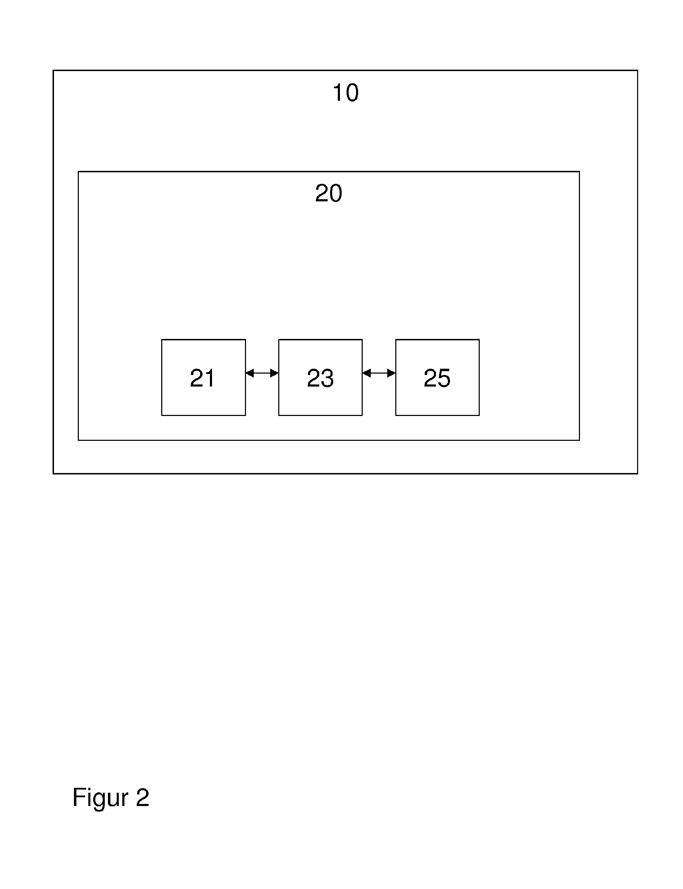

Die Figur 2 zeigt schematisch eine Anlage 10 mit einer Vorrichtung 20, die ausgebildet ist, Energie- und/oder Mediendaten zur Beurteilung des Zustands der Anlage aufzunehmen. Dabei kann die Vorrichtung 20 das Verfahren, das entsprechend Figur 1 oben beschrieben ist, ausführen. Die Vorrichtung umfasst eine Aufnahmeeinheit 21, eine Vergleichseinheit 25 und eine Kontrolleinheit 23. Die Kontrolleinheit 23 ist beispielsweise ausgebildet, die Dauer der Referenzzeiträume und Vergleichszeiträume aufzunehmen, festzuhalten und zu speichern, wie dies im Zusammenhang mit dem anhand von Figur 1 erläuterten Verfahren vorgesehen ist. Die Kontrolleinheit 23 ist ebenfalls dazu ausgebildet, die zu den Energie- und Mediendaten korrespondierenden Toleranzen aufzunehmen, festzuhalten und zu speichern. Die Kontrolleinheit 23 stellt diese Werte der Aufnahmeeinheit 21 und der Vergleichseinheit 25 bereit. Die Aufnahmeeinheit 21 ist dazu ausgebildet, die Referenzdaten und die Vergleichsdaten über die vordefinierten Zeiträume wie anhand von Figur 1 erläutert, aufzunehmen. Die Aufnahmeeinheit 21 oder die Kontrolleinheit 23 speichern die gewonnenen Referenzdaten und Vergleichsdaten beispielsweise auf einem geeigneten Speichermedium (hier nicht gezeigt). Die Vergleichseinheit 25 vergleicht die korrespondierenden Referenzwerte/Referenzdaten und Vergleichswerte/Vergleichsdaten und stellt die Ergebnisse der Kontrolleinheit 23 zur Verfügung. Entsprechend dem anhand von Figur 1 erläuterten Verfahren kann die Kontrolleinheit 23 vordefinierte Maßnahmen einleiten. Dazu steht die Kontrolleinheit 23 über die Vorrichtung 20 mit der Anlage 10 in Verbindung. Diese Verbindung kann sowohl über Kabel vorgesehen sein oder auch mittels drahtloser Datenübertragung geschehen (jeweils hier nicht gezeigt). Die vordefinierten Maßnahmen können eine E-Mail oder eine SMS auf ein Mobiltelefon umfassen oder, wie auch schon anhand von Figur 1 diskutiert, das Reduzieren der Anlagenleistung oder das Herunterfahren der Anlage. Die Kontrolleinheit 23 kann ein Computer, der ausgebildet ist, das oben diskutierte Verfahren auszuführen.

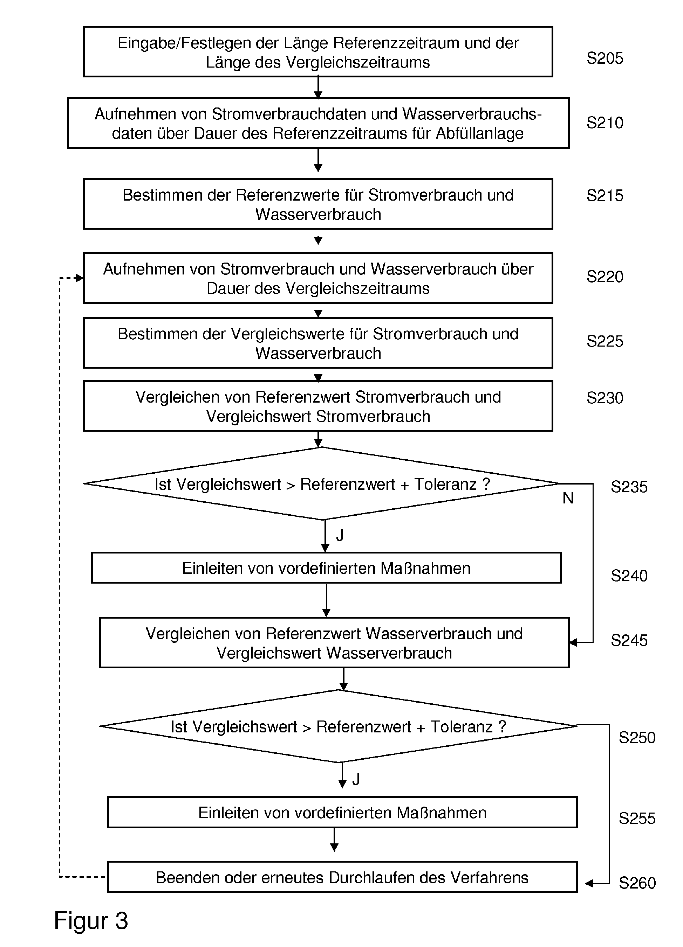

Die Figur 3 zeigt ein Verfahren ähnlich dem Verfahren, dass in der Figur 1 dargestellt ist für das Beispiel einer Abfüllanlage für Getränke in Flaschen. Dabei kann die Anlage der schematisch in Figur 2 gezeigten Anlage 10 ähnlich sein. Für die Abfüllanlage für Getränke soll beispielhaft der Stromverbrauch und der Wasserverbrauch betrachtet werden. Es versteht sich, dass weitere Medien, wie etwa Gas, Druckluft oder anderen Medien zusätzlich oder alternativ betrachtet werden können.

Für die Abfüllanlage werden im Schritt S205 die Länge/Dauer des Referenzzeitraums und des Vergleichszeitraums definiert, über den der Stromverbrauch und der Wasserbrauch jeweils betrachtet werden sollen.

Für die betrachtete Abfüllanlage werden in den Schritten S210 und S215 die Referenzwerte gewonnen. Um die Referenzwerte zu gewinnen kann die Abfüllanlage beispielsweise ein oder mehrere Messwertaufnehmer (hier nicht gezeigt) für Strom im Bereich des Nassteils der Anlage umfassen. Ebenso können ein oder mehrere andere, weitere Messwertaufnehmer (hier nicht gezeigt) im Bereich des Trockenteils der Anlage vorgesehen sein. Es ist ebenso möglich in jedem Anlagenteil ein oder mehrere Messwertaufnehmer für Strom vorzusehen. Entsprechend können Wasserbrauchsanzeiger in der Anlage vorgesehen sein (hier nicht gezeigt).

Ein Abfüllanlage kann typischerweise für ein spezielles Produkt, beispielsweise für die Abfüllung von Saft in Flaschen abgestimmt werden und entsprechend sollten Referenzdaten für den Strom- und den Wasserverbrauch bestimmt werden. Dieselbe Abfüllanlage kann allerdings zu einem anderen Zeitpunkt zur Abfüllung weiterer, etwa anderer Produkte umgerüstet werden, beispielsweise wenn sich die Flaschengröße ändert oder wenn ein anderes Getränk abgefüllt werden soll. Entsprechend sollten dann andere, neue Referenzdaten gewonnen werden, um dem veränderten Abfüllprozess Rechnung tragen zu können.

In den Schritten S220 und S225 werden die Vergleichswerte für den Stromverbrauch und den Wasserverbrauch für den vordefinierten Vergleichszeitraum bestimmt.

In den Schritten S230 und S235 werden die korrespondierenden Referenzwerte und Vergleichswerte für den Stromverbrauch beurteilt im Hinblick auf eine korrespondierende, vordefinierte Toleranz. Wie bereits anhand von Figur 1 diskutiert, wird beispielhaft hier in Schritt S235 die Differenz der Werte betrachtet. Falls die Toleranz in Schritt S235 überschritten wird, werden vordefinierte Maßnahmen eingeleitet. Beträgt also beispielsweise der Referenzwert für den Stromverbrauch der Abfüllanlage X kWh und der Vergleichswert für den Stromverbrauch Y kWh, wobei Y > X angenommen sei, so kann die Differenz Y - X im Hinblick auf die vordefinierte Toleranz T betrachtet werden, etwa Y - X > T. Falls eine 10% Toleranz maximal erlaubt wäre, wären demnach für Y > 1,1 X Maßnahmen einzuleiten. Diese Betrachtung soll rein beispielhaft verstanden sein.

Diese Maßnahmen können Informationsmaßnahmen wie etwa das beispielsweise automatische Verschicken von E-Mail oder SMS an Nutzer oder Operateure der Anlage umfassen, um auf die Abweichung hinzuweisen. Ebenso können Sicherheitsmaßnahmen eingeleitet werden, etwa das Herunterfahren der Anlage. Diese können insbesondere sicherstellen, dass ein verändertes Verhalten der Abfüllanlage, beispielsweise durch mechanischen Verschleiß in Führungen, Getrieben, Lagern etc. oder auch Ausfälle von mechanischen, hydraulischen, elektrischen oder elektronischen Bauteilen zu ernsthaften Schäden an der Anlage führen können.

In den Schritten S245 und S250 werden die korrespondierenden Referenzwerte und Vergleichswerte für den Wasserverbrauch der Abfüllanlage hinsichtlich einer korrespondierenden, vordefinierten Toleranz beurteilt. Wie bereits anhand von Figur 1 diskutiert, wird hier beispielhaft die Differenz der Werte betrachtet. Ebenso wäre es möglich, eine prozentuale Abweichung zu betrachten. In Schritt S250 werden erneut vordefinierte Maßnahmen eingeleitet, um einen Nutzer oder Operateur der Anlage bezüglich des Überschreitens der Toleranz zu informieren oder um Sicherheitsmaßnahmen einzuleiten. Beim Wasserverbrauch kann ein erhöhter Wasserbrauch beispielsweise auch auf ein Leck innerhalb der Anlage hindeuten.

Es versteht sich, dass die in den zuvor beschriebenen Ausführungsbeispielen genannte Merkmale sich nicht auf die speziell in den Figuren gezeigten Kombinationen beschränken, sondern auch in beliebigen anderen Kombinationen möglich sein können.

## Patentansprüche

1. Verfahren zur Beurteilung eines Zustands einer Anlage (10) und zur Einleitung von Maßnahmen basierend auf der Beurteilung mit den Schritten:
i) Aufnehmen von Energie- und/oder Mediendaten über einen Referenzzeitraum vordefinierter Dauer zur Bestimmung von Referenzwerten jeweils für die Energie- und/oder Mediendaten;
ii) Aufnehmen von Energie- und/oder Mediendaten über einen Vergleichszeitraum vordefinierter Dauer, die beispielsweise gleich der Dauer des Referenzzeitraums ist, zur Bestimmung von Vergleichswerten jeweils für die Energie- und/oder Mediendaten;
iii) Vergleichen der Vergleichswerte für die Energie- und/oder Mediendaten mit den korrespondierenden Referenzwerten;
iv) Einleiten von vordefinierten Maßnahmen bezüglich der Anlage (10), wenn die jeweilige Abweichung der Vergleichswerte von den korrespondierenden Referenzwerten einen korrespondierenden vordefinierten Toleranzwert überschreitet.

2. Verfahren nach Anspruch 1, wobei die Energiedaten den Verbrauch an Energie und/oder Strom umfassen.

3. Verfahren nach wenigstens einem der Ansprüche 1 und 2, wobei die Mediendaten den Verbrauch von mindestens einem der folgenden Medien umfassen: Wasser, Fluid, Öl, Schmierfette, Reinigungsmittel.

4. Verfahren nach wenigstens einem der Ansprüche 1 - 3, wobei die Maßnahmen Informationsmaßnahmen und/oder Sicherheitsmaßnahmen umfassen.

5. Verfahren nach Anspruch 4, wobei die Informationsmaßnahmen das beispielsweise automatisierte Aussenden von vordefinierten optischen und/oder akustischen Signalen umfasst, beispielsweise das Verschicken von Email und/oder das Verschicken einer Kurznachricht, SMS, auf ein Mobiltelefon und/oder das Verschicken einer Kurznachricht auf einen Funkmeldeempfänger, Pager, und/oder das Verschicken einer aufgezeichneten Sprachnachricht an ein Mobiltelefon oder Festnetztelefon.

6. Verfahren nach wenigstens einem der Ansprüche 4 oder 5, wobei die Sicherheitsmaßnahmen mindestens eine der folgenden Maßnahmen umfassen: Reduktion der Anlagenleistung, Abschalten/Herunterfahren der Anlage (10), Wartung der Anlage (10).

7. Verfahren nach wenigstens einem der Ansprüche 1 - 6, ferner mit dem Schritt des Anpassens der Referenzwerte an vordefinierte Produktionsparameter, beispielsweise Produktgrößen.

8. Verfahren nach wenigstens einem der Ansprüche 1 - 7, ferner mit dem Schritt des Anpassens der Referenzwerte gemäß Schritt i) in vordefinierten Zeitabständen.

9. Computerprogrammprodukt, umfassend wenigstens ein computerlesbares Medium mit durch einen Computer ausführbaren Anweisungen zum Durchführen der Schritte des Verfahrens nach wenigstens einem der Ansprüche 1 - 8 beim Betrieb auf einem Computer.

10. Vorrichtung (20) zur Durchführung des Verfahrens nach wenigstens einem der Ansprüche 1 - 8, mit einer Aufnahmeeinheit (21) zum Aufnehmen von Energie- und/oder Mediendaten, mit einer Vergleichseinheit (25) zum Vergleichen der Referenzwerte und der Vergleichswerte und mit einer Kontrolleinheit (23) zum Einleiten der vordefinierten Maßnahmen.

11. Vorrichtung (20) nach Anspruch 10, wobei die Aufnahmeeinheit (21) ausgebildet ist, die Energie- und/oder Mediendaten automatisch aufzunehmen, die Vergleichseinheit (25) ausgebildet ist, die Referenzwerte und die Vergleichswerte automatisch zu vergleichen, und die Kontrolleinheit (23) ausgebildet ist, die vordefinierten Maßnahmen automatisch einzuleiten.
